# EUROPEAN PATENT APPLICATION

(11) **EP 4 106 168 A1**
(43) Date of publication of application: **21.12.2022**
(21) Application number: 21179516.6
(22) Date of filing: 15.06.2021
(51) Int. Cl.: H02M 1/44, H02M 7/483

(54) **HIGH-VOLTAGE CONVERTER ARRANGEMENT**

(71) Applicant: Hitachi Energy Switzerland AG, 5400 Baden (CH)
(72) Inventor: SCHROEDER, Arne, 3012 Bern (CH); COTTET, Didier, 8050 Zürich (CH); GRADINGER, Thomas Bernhard, 50332 Aarau Rohr (CH); BORMANN, Dierk, 72353 Västeras (SE); BEIL, Andreas, 8824 Schönenberg (CH); ERIKSSON, Goran, 72335 Västeras (SE)
(74) Representative: Epping - Hermann - Fischer

(57) **Abstract**

A High-Voltage converter arrangement (1) comprises a plurality of switching cells (10a, ..., 10x), and at least one damping unit (50) being configured to dampen electromagnetic noise caused by a switching operation within the switching cells (10a, ..., 10x). The switching cells (10a, ..., 10x) are interconnected in series by a galvanic connection (20). The at least one damping unit (50) is arranged between a cell potential of a first of the switching cells (10a, 10j) and a cell potential of a second of the switching cells (101, 10v), and at least another one of the switching cells (10a, ..., 10x) is arranged between the first switching cell (10a, 10j) and second switching cell (101, 10v).

## Description

The present disclosure relates to a high-voltage converter arrangement based on voltage source converters that comprise series-connected switching cells.

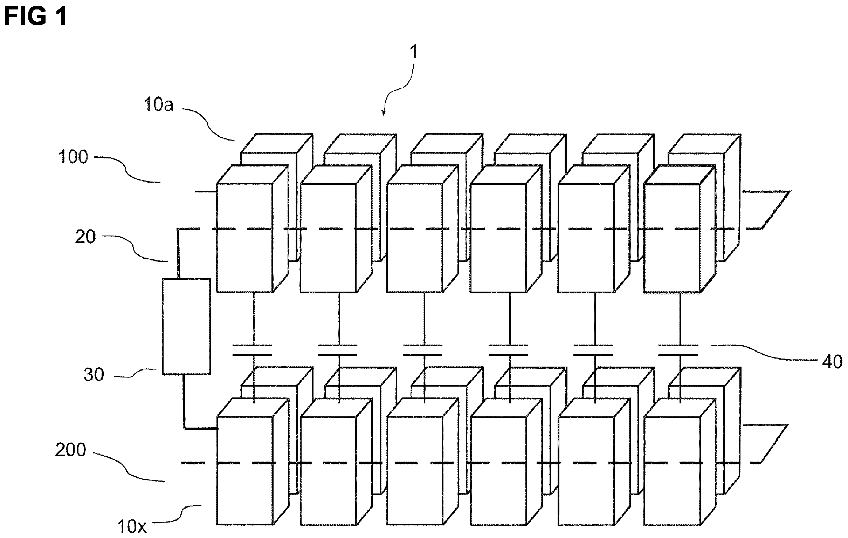

Nowadays HVDC (High-Voltage Direct Current) converters are typically based on voltage source converters (VSC) comprising many series-connected switching cells. Figure 1 shows a simplified illustration of high-voltage converter arrangement 1 comprising switching cells 10a,..., 10x which are connected in series with a galvanic connection 20, for example a bus bar, and stacked in a so-called valve structure. The switching cells are arranged in a first layer 100 and a second layer 200 which are arranged in the valve structure one above the other. A similar arrangement, as shown in Figure 1, might be installed in HVDC line-commuted converters (LCC) or flexible alternating current transmission system (FACTS) converters.

Referring to Figure 1, a parasitic inductance 30 is provided by the galvanic connection 20 between the switching cells of the various layers. Moreover, parasitic capacitances 40 is formed between the switching cells of the different layers 100 and 200. The parasitic elements determine the high frequency properties of the valve structure.

The switching cells 10a, ..., 10x comprise power-semiconductor switches that can be turned on by control action. The switching events of power-semiconductors within the switching cells 10a, ..., 10x generate high frequency currents leading to considerable wideband electromagnetic noise. This noise is partly radiated by a converter station. Moreover, the electromagnetic noise may interfere with secondary electronic systems in the vicinity of the converter station where it can cause electromagnetic compatibility (EMC) issues. For these reasons, HVDC converters must comply with certain EMC requirements, for example Cigre TB 391.

The electromagnetic noise generated by the switching events is typically filtered at system level, by introducing filter circuits in an AC- or DC-yard of a converter substation, or by introducing high frequency damping devices in the main converter current paths.

Such electromagnetic interference (EMI) filtering components are typically bulky, heavy, expensive, and often require additional space. The components used in such filters are specially designed to comply with given requirements; they are not taken off the shelf. Accordingly, the costs for material and engineering can be significant.

Damping devices in the main current paths have to be designed to provide high frequency filtering while carrying the full low frequency current. Therefore, the use of magnetic materials needs very careful design and typically large cores in order to avoid saturation under full current load.

Design challenges of an appropriate damping device of a high-voltage converter arrangement arise from the fact that the damping device is exposed to a high voltage drop that may be larger than 10 kV and, at the same time, it should be efficient at frequencies above 1 MHz. Moreover, the damping devices shall be operated for a long lifetime of more than 30 years without failures. Another requirement is that the damping devices shall be able to operate in both indoor and outdoor environments.

Therefore, there is a need to provide a high-voltage converter arrangement which provides significant reduction of high frequency noise by using at least one damping device being designed to save space, and at the same time, prevent costly EMI design adaptions.

A high-voltage converter arrangement that provides efficient reduction of high frequency noise is specified in claim 1.

According to an embodiment of a high voltage converter arrangement, the high voltage converter arrangement comprises a plurality of switching cells. The high voltage converter arrangement comprises at least one damping unit being configured to dampen electromagnetic noise caused by a switching operation within the switching cells. The switching cells are interconnected in series by a galvanic connection. The at least one damping unit is arranged between a cell potential of a first of the switching cells and a cell potential of a second of the switching cells. At least another one of the switching cells is arranged between the first switching cell and the second switching cells.

According to a possible embodiment, the plurality of switching cells are arranged in a first and second layer of a valve structure. The first and second layer of the switching cells are spatially separated from each other within the valve structure.

According to a possible embodiment, the first switching cell and the second switching cell are arranged in one of the first and second layer. That means that the at least one damping unit is arranged between a cell potential of a respective one of the switching cells and a respective other one of the switching cells of the same one of the first and second layer. Since at least another one of the switching cells is located between the first switching cell and the second switching cell, the first and second switching cell are arranged non-adjacent, i.e. non-side-by-side, to each other along the galvanic connection in the same layer of the valve structure.

According to another embodiment, the first switching cell and the second switching cell are arranged in different ones of the first and second layer. That means that the at least one damping unit is arranged between a cell potential of one of the switching cells of the first layer and a cell potential of another one of the switching cells of the second layer.

According to another possible embodiment, the at least one damping unit may be implemented between the potential of one switching cell of a first portion/module of series-connected switching cells and a potential of another switching cell of a second portion/module of series-connected switching cells in the same layer. That means that the at least one damping unit is located between a respective potential of switching cells, wherein one of these switching cells is arranged in the respective first portion/module of the first and second layer and another one of these switching cells is arranged in the respective second portion/module of the first and second layer.

The at least one damping unit may thus be arranged between different potentials within the same layer or between the potential of one switching cell of one layer and another switching cell of a neighbouring layer of the valve structure.

According to a possible embodiment of the high voltage converter arrangement, the at least one damping unit is configured as an RC-damper comprising at least one capacitor and at least one resistor which are connected in series by a galvanic/conductive connection, for example a metal connection. All components of the damping unit should be low-inductive to ensure that a self-resonance of the damper is far above the frequency range of interest, for example a frequency range of between 1 MHz to 30 MHz.

The at least one capacitor may be configured as a single layer, ceramic high voltage capacitor, and the at least one resistor may be configured as a high-energy disk resistor which allows a very low parasitic inductance to be exhibited.

The at least one damping unit according to the proposed arrangement within the valve structure and design allows the high voltage converter arrangement to be provided with efficient suppression of electromagnetic radiated noise. Moreover, the high voltage converter arrangement is configured as a low inductive assembly (< 500 nH) being effective up to several MHz. The at least one damping unit can withstand a potential difference of more than 30 kV.

According to another possible embodiment of the high voltage converter arrangement, the at least one damping unit comprises a high voltage fuse element that provides protection of the high voltage capacitances from short circuit failure modes.

According to another possible embodiment, the at least one damping unit may be enclosed in an insulating housing. The insulating housing may be configured as a hollow-core insulator. Furthermore, the insulating housing may contain a material of porcelain, or an outdoor grade epoxy, or an indoor grade epoxy covered by an outdoor grade silicone rubber coating. The proposed insulating housing to encase the at least one damping unit allows the application of the high voltage converter arrangement in outdoor environments.

In order to fulfil special requirements for climate control, according to another possible embodiment, the at least one damping unit may be coupled to a climate control system or a ventilation system.

The accompanying figures are included to provide a further understanding. In the figures, elements of the same structure and/or functionality may be referenced by the same reference signs. It is to be understood that the embodiments shown in the figures are illustrative representations and are not necessarily drawn to scale.
Figure 1 shows a simplified illustration of a high-voltage converter arrangement based on voltage source converters with parasitic elements;
Figure 2A shows a first embodiment of a high-voltage converter arrangement comprising a damping unit arranged in parallel to switching cells of different layers of a valve structure of the converter arrangement;
Figure 2B shows a second embodiment of a high-voltage converter arrangement comprising damping units arranged in parallel to switching cells of different layers of a valve structure of the converter arrangement;
Figure 2C shows a third embodiment of a high-voltage converter arrangement comprising damping units arranged in parallel to switching cells of different layers of a valve structure of the converter arrangement;
Figure 2D shows a fourth embodiment of a high-voltage converter arrangement comprising damping units arranged in parallel to switching cells of the same layer of a valve structure of the converter arrangement;
Figure 3 shows an equivalent circuit of two layers of a valve structure of a high-voltage converter arrangement including a damping unit;
Figure 4 shows an embodiment of a high-voltage converter arrangement with attenuation of electromagnetic noise comprising an equipotential frame between different layers of the converter arrangement;
Figure 5A shows a first embodiment of an assembly of a damping unit of a high-voltage converter arrangement;
Figure 5B shows a second embodiment of an assembly of a damping unit of a high-voltage converter arrangement including multiple capacitors and resistors;
Figure 5C shows a third embodiment of an assembly of a damping unit of a high-voltage converter arrangement including an alternated arrangement of capacitors and resistors;
Figure 5D shows a fourth embodiment of an assembly of a damping unit of a high-voltage converter arrangement including field shaping elements to reduce local field enhancement;
Figure 5E shows an arrangement of groups of capacitors/resistors of a damping unit of a high-voltage converter arrangement;
Figure 6 shows an embodiment of a high-voltage converter arrangement including a monitoring system to indicate a state of a high-voltage fuse element;
Figure 7A shows a first embodiment of an insulating housing configured as a hollow core insulator for encapsulating a damping unit of a high voltage converter arrangement;
Figure 7B shows a second embodiment of an insulating housing for encapsulating a damping unit of a high voltage converter arrangement including an insulating media; and
Figure 7C shows an embodiment of a damping unit encapsulated in an insulating housing and coupled to a climate control/ventilation system for a high voltage converter arrangement.

While the disclosure is amenable to various modifications and alternative forms, specifics thereof have been shown by way of example in the figures and will be described in detail. It should be understood, however, that the intention is not to limit the disclosure to the particular embodiments described. On the contrary, the intention is to cover all modifications, equivalents, and alternatives falling within the scope of the disclosure defined by the appended claims.

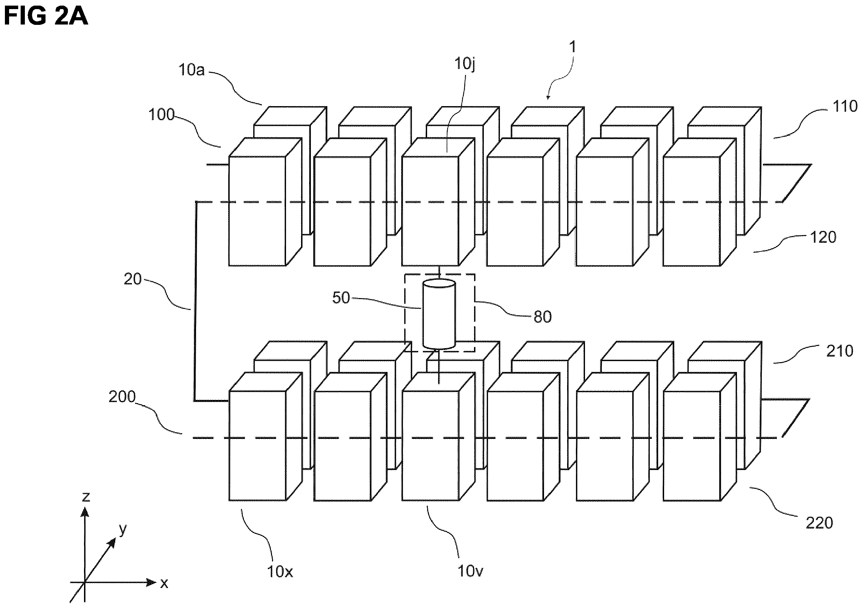

Figures 2A -2D show various embodiments of a high-voltage converter arrangement 1 comprising a damping unit to provide attenuation of electromagnetic noise. The high voltage converter arrangement 1 may be configured to convert DC voltage to AC voltage or vice versa. According to another embodiment, the high voltage converter arrangement 1 may be configured to covert DC voltage to DC voltage or AC voltage to AC voltage.

The high voltage converter arrangement 1 comprises a plurality of switching cells 10a, ..., 10x. The switching cells 10a, ..., 10x are interconnected in series by a galvanic connection 20, for example a busbar. The high-voltage converter arrangement 1 comprises at least one damping unit 50 being configured to dampen electromagnetic noise caused by a switching operation within the switching cells 10a, ..., 10x. As further illustrated in Figures 2A-2D, the at least one damping unit 50 is arranged between a cell potential of a first of the switching cells and a cell potential of a second of the switching cells. As further illustrated in Figures 2A-2D, at least another one of the switching cells is arranged between the first switching cell and the second switching cell.

The switching cells 10a, ..., 10x are arranged in at least a first layer 100 and at least a second layer 200 of a valve structure. The first layer 100 and the second layer 200 of the switching cells 10a, ..., 10x are spatially separated from each other within the valve structure.

The first layer 100 of the switching cells and the second layer 200 of the switching cells are stacked on top of each other in a z-direction (vertical direction) of the valve structure and are spaced apart from each other in the z-direction. Furthermore, the respective switching cells 10a, ..., 10x of the first and second layer 100, 200 are spaced apart from each other within the first and second layer 100, 200 in an x-direction and a y-direction.

The first layer 100 comprises a first portion/module 110 of some of the switching cells and a second portion/module 120 of other ones of the switching cells. The second layer 200 also comprises a first portion/module 210 of some of the switching cells and a second portion/module 220 of a remainder of the switching cells. The switching cells of the respective first portion 110, 210 of the first and second layer 100, 200 are spaced apart from each other in the x-direction along the galvanic connection 20, and the switching cells of the second portion 120, 220 of the first and second layer 100, 200 are spaced apart from each other in the x-direction along the galvanic connection 20.

As further illustrated in Figures 2A-2D, the first and second portion 110, 120 of the switching cells of the first layer 100 are spaced apart from each other in the y-direction. The first and second portion 210, 220 of the switching cells of the second layer 200 are also spaced apart from each other in the y-direction.

Figures 2A -2D show embodiments of the high voltage converter arrangement 1, where the x-direction, y-direction and z-direction are orthogonal to each other. A coordinate system showing the x-, y- and z-direction is shown in Figure 2A. It has to be noted that other arrangements of the switching cells, particularly arrangements, where the x-, y- and z-direction are not orthogonal to each other are possible.

Referring to Figure 2A, for example, the at least one damping unit 50 is arranged between the cell potential of switching cell 10j and the cell potential of switching cell 10v. Moreover, eleven other switching cells are arranged between switching cell 10j and switching cell 10v. The at least one damping unit 50 is arranged in parallel to switching cells 10j and 10v and the switching cells arranged between switching cell 10j and switching cell 10v.

According to the embodiment of the high-voltage converter arrangement shown in Figures 2A-2C, the at least one damping unit 50 is arranged between a cell potential one of the switching cells of the first layer 100 and a cell potential of another one of the switching cells of the second, neighbouring layer 200.

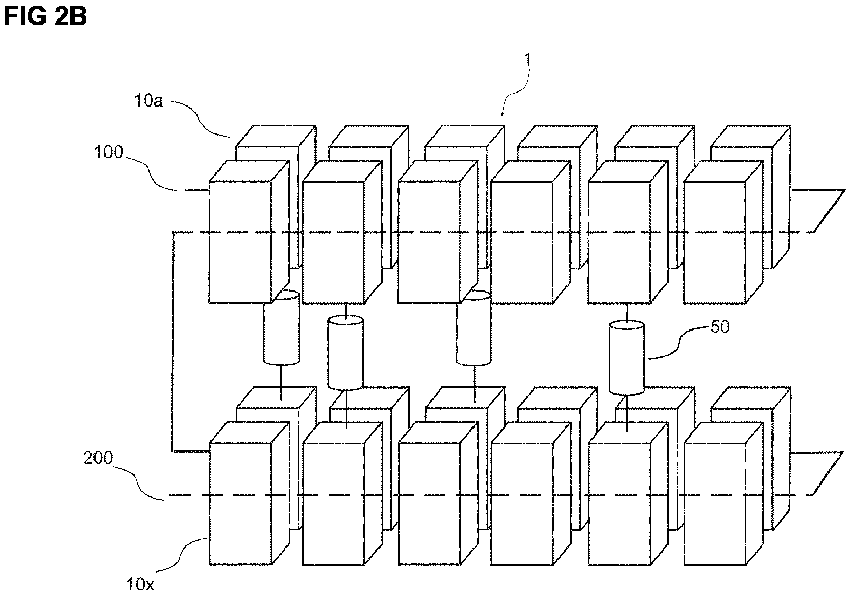

In comparison to the implementation of Figure 2A, Figure 2B shows an arrangement of a plurality of damping units 50 between the different layers 100 and 200 of the valve structure. A damping unit 50 is respectively arranged between a cell potential of a switching cell of layer 100 and a cell potential of another switching cell of the layer 200.

Regarding the embodiments shown in Figures 2A and 2B, the at least one damping units 50 is arranged between respective cell potentials of switching cells 10a, ..., 10x that are arranged in the layers 100 and 200 of the valve structure opposed to each other in the z-/vertical direction. That means that the at least one damping unit 50 is vertically oriented, i.e. in the z-direction, in the valve structure.

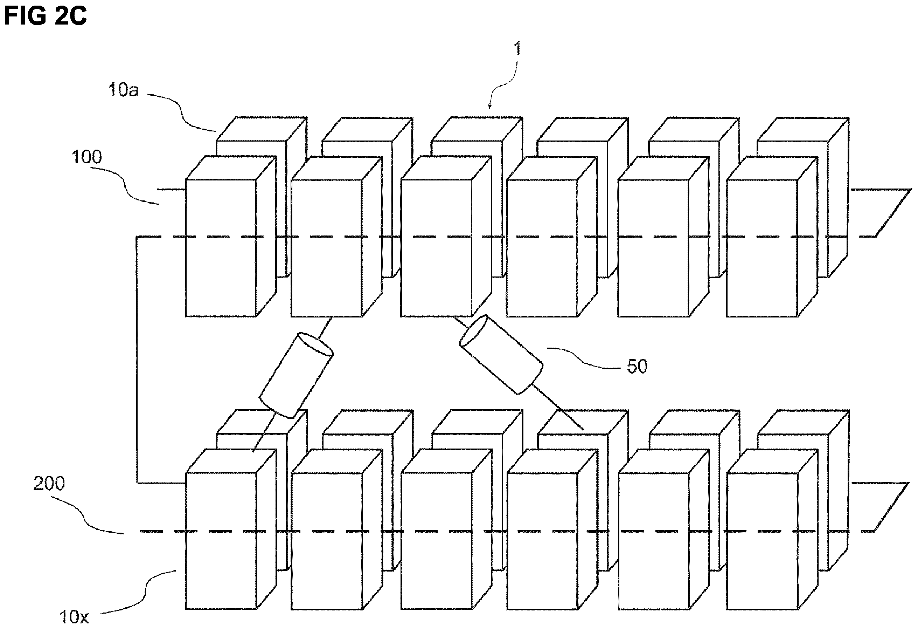

Figure 2C shows an arrangement of damping units 50 in a valve structure of a high-voltage converter arrangement, where at least one damping unit 50 is arranged between a respective cell potential of switching cells being arranged non-opposed/non-facing each other in the layers 100 and 200. In this case the shown damping units 50 connect arbitrary switching cells in the two neighbouring layers 100 and 200 so that, in contrast to the embodiments of Figures 2A and 2B, the damping units 50 are not oriented vertically in the valve structure.

Regarding the arrangement of damping units 50 between a respective potential of switching cells located in neighbouring layers 100 and 200, there should be at least one damping unit between each layer of the valve structure.

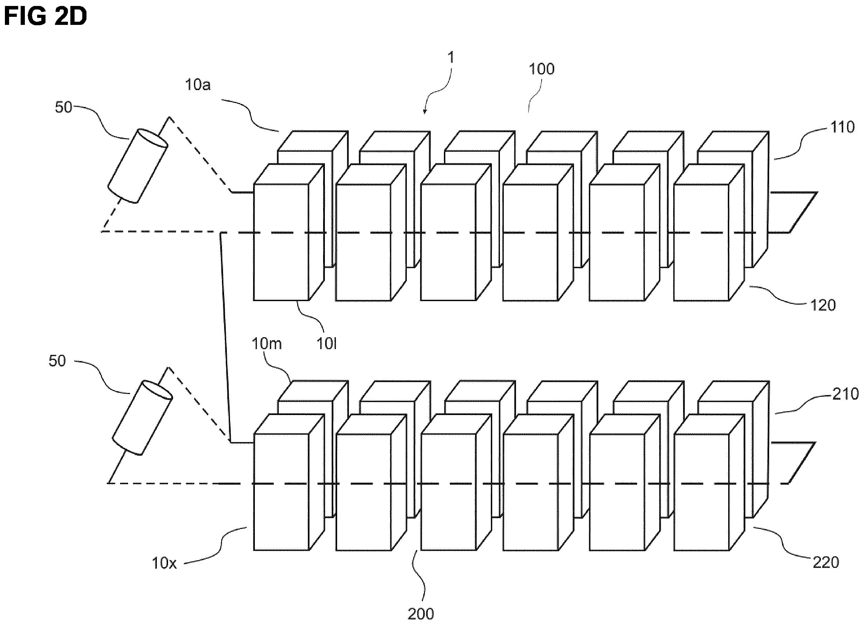

Another possible arrangement of damping units 50 within the valve structure of a high voltage converter arrangement is shown in Figure 2D. In this case, at least one damping unit 50 is arranged between a respective cell potential of one of the switching cells and another one of the switching cells of the same layer 100 or 200. The at least one damping unit is arranged between a respective cell potential of switching cells 10a, ..., 10x that are arranged non-adjacent, i.e. non-side-by-side to each other along the galvanic connection 20 in the same layer.

It has to be noted that, according to another embodiment, the switching cells 10a, ..., 10x need not to be arranged in different layers, as illustrated in Figure 2D. The switching cells 10a, ..., 10x may rather be arranged in one layer. In this case, the at least one damping unit 50 is arranged between a cell potential of a first of the switching cells and a cell potential of a second of the switching cells of the single layer, and at least another one of the switching cells is arranged between the first switching cell and second switching cell.

Referring again to the embodiment shown in Figure 2D, a damping unit 50 is arranged between a cell potential of one of the switching cells of the first portion/module 110 of the switching cells and a cell potential of another one of the switching cells of the second portion/module 120 of layer 100. Another damping unit 50 is arranged between a cell potential of a switching cell of the first portion/module 210 of the switching cells of the second layer 200 and a cell potential of another one of the switching cells of the second portion/module 220 of the switching cells of the second layer 200.

A combination of the various arrangements of the damping units 50 within the same layer 100, 200 or between different layers 100 and 200 of the valve structure, as shown in Figures 2A-2D, is basically possible.

The at least one damping unit 50 may be realized as a separate component or may be integrated into structural elements, for example an insulating spacer 80, that is arranged between neighboring layers 100 and 200 of the valve structure. Figure 2A exemplarily shows an embodiment of the high-voltage converter arrangement, where the at least one damping unit 50 is integrated into insulating spacer 80.

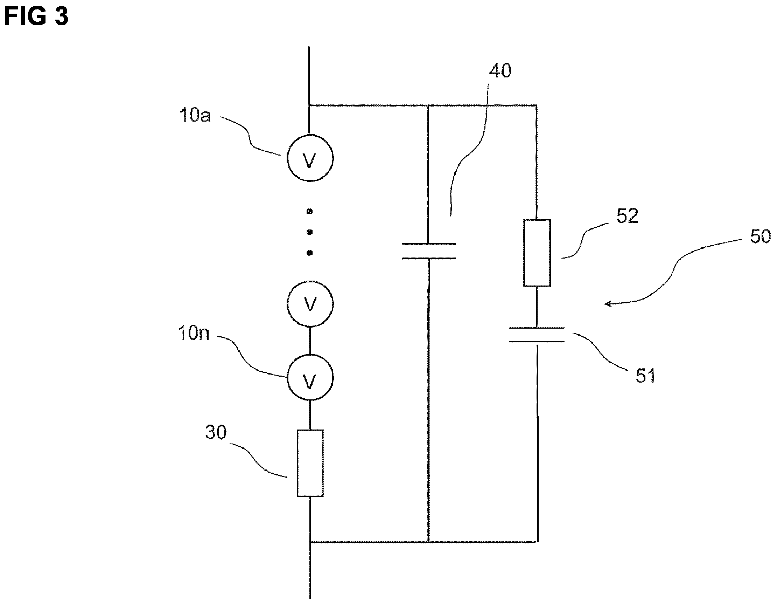

Figure 3 shows an equivalent circuit of two neighbouring layers 100 and 200 of a valve structure of a high voltage converter arrangement including at least one damping unit 50 that is arranged between several switching cells 10a, ..., 10n. The switching cells are modelled as voltage sources. Figure 3 also shows parasitic elements, such as the parasitic bus bar inductance 30 and the parasitic stray capacitance 40 between the switching cells/voltage sources. The damping unit 50 is arranged in parallel to the switching cells 10a, ..., 10k.

The damping unit 50 is configured as an RC-damper and comprises at least one capacitor 51 and at least one resistor 52 which are arranged in series to each other.

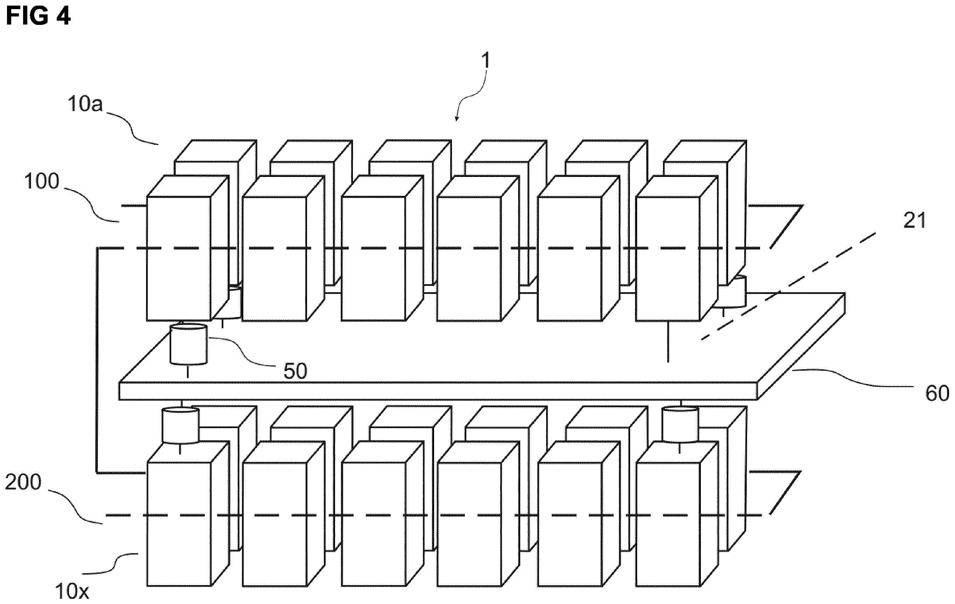

Figure 4 shows an embodiment of a high-voltage converter arrangement, wherein the valve structure is provided with an equipotential frame 60 that is arranged in an equipotential plane between the first layer 100 and the second layer 200 of the switching cells 10a, ..., 10x. The potential of the frame 60 is determined by a conductive connection 21 of the frame 60 to a certain switching cell potential of the first and/or second layer 100, 200.

As illustrated in Figure 4, at least one damping unit 50 can be arranged between the equipotential frame 60 and a cell potential of a respective switching cell 10a, ..., 10x of one of the first and second layer 100, 200. The at least one damping unit 50 may be implemented between the potential of the frame 60 and a cell potential of a switching cell of the layer 100. Another damping unit 50 may be implemented between the potential of frame 60 and the cell potential of a switching cell of the neighbouring layer 200.

Figures 2A to 2D as well as Figure 4 illustrate potential implementations of the at least one damping unit 50 between switching cells 10a, ..., 10x of the same layer or between switching cells 10a, ..., 10x of neighbouring layers 100 and 200. However, it should to be noted that the at least one damping unit 50 can be integrated in the valve structure in various ways.

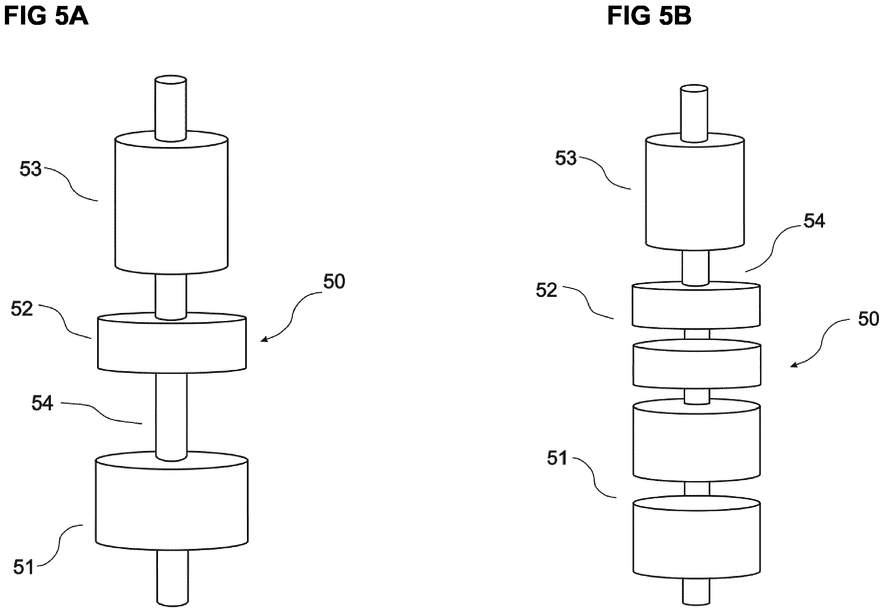

Figure 5A illustrates an embodiment of a damping unit 50 configured as a basic RC-damper comprising a high-voltage capacitor 51, and a resistor 52. The components are connected in series by a conductive connection 54. All components should be low inductive to ensure that the self-resonance of the damping unit is far above the frequency range of interest, for example a frequency range of between 1 MHz to 30 MHz. This is the ideal case. There might be solutions in which the self-resonance frequency is lower, but there is still some effect from the damper. Simulations show that the design of a damping unit comprising at least one in series connected capacitor and resistor lead to a significant attenuation of electromagnetic noise above 1 MHz.

The capacitor 51 may be configured as a single layer, ceramic high-voltage capacitor, for example a disc capacitor. The at least one resistor 52 may be configured as a high-energy disc resistor, for example a ceramic disc resistor. High-voltage single layer disc capacitors and ceramic disc resistors exhibit a very low parasitic inductance, for example in a range of between 1 nH to 50 nH. The conductive connection 54 between the elements can be realized as low-inductive bar or rod or cable, for example. Typical values for the capacitance of the at least one capacitor 51 are between 0.5 nF and 5 nF. The at least one resistor 52 may have a resistance between 10 **Ω** and 1 k**Ω.**

Figures 5B to 5E show several assembly variations of the damping unit 50. Figure 5B shows an assembly variation where the damping unit 50 comprises a plurality of capacitors 51 and a plurality of resistors 52 that are arranged in series along the conductive connection 54 to enhance redundancy and reliability. Moreover, the maximum electric field strength within the damping unit can be reduced when using multiple capacitors.

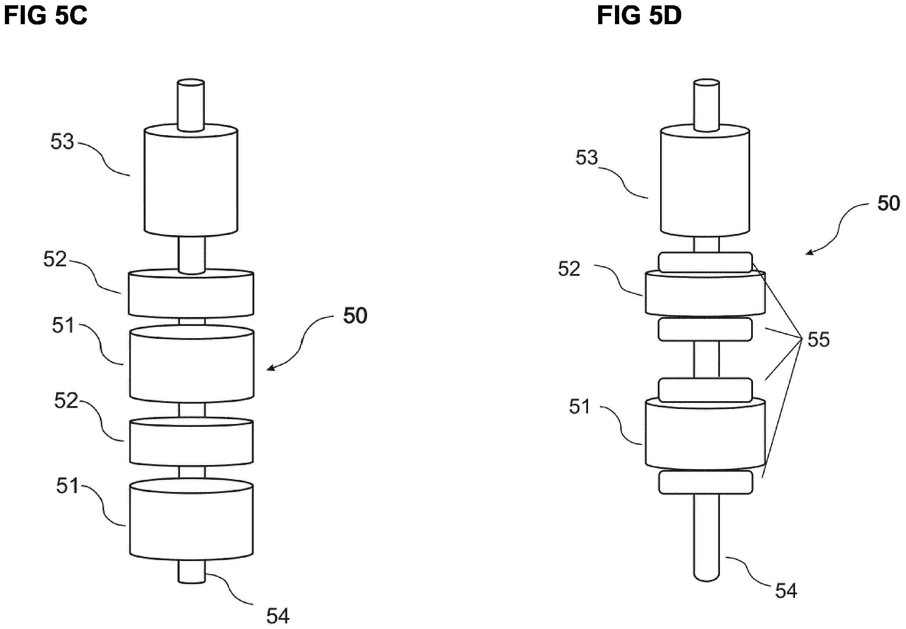

Figure 5C shows an assembly variation of the damping unit 50, where a plurality of capacitors 51 and a plurality of resistors 52 are arranged in an alternated fashion in comparison to the non-alternated arrangement shown in Figure 5B.

Figure 5D shows another assembly variation of the damping unit 50 comprising at least one field shaping element 55 to reduce local electric field enhancement at the at least one capacitor 51 or resistor 52 of the damping unit 50. Basically, field shaping elements 55 can be arranged on a top and/or bottom side of the capacitor 51 and/or on a top and bottom side of the resistor 52, as illustrated in Figure 5D to reduce local field enhancements.

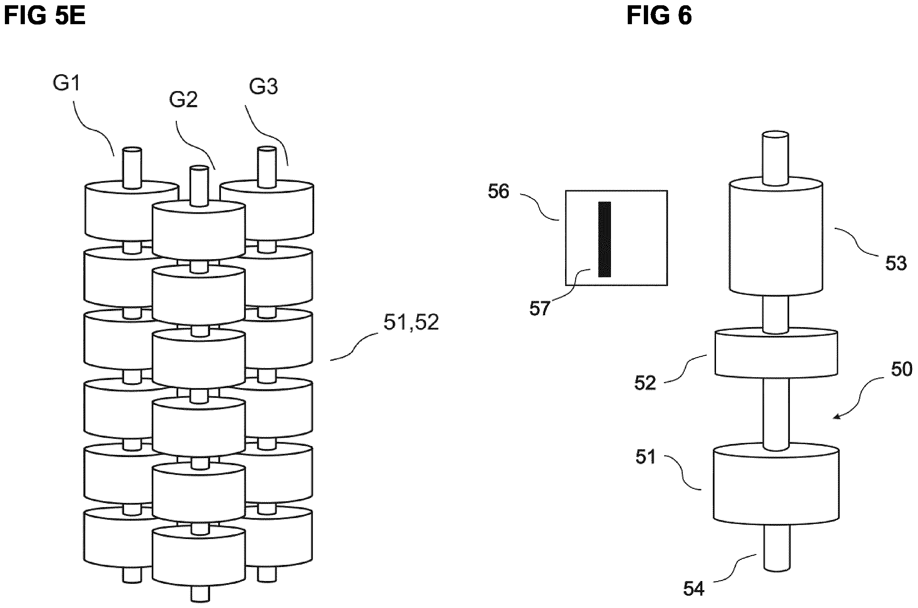

A plurality of capacitors 51 may be electrically connected in series or in parallel. Figure 5E shows an embodiment, where groups G1, G2 and G3 of a plurality of capacitors 51/resistors 52 may be connected in series, and the groups G1, G2, G3 of the series-connected capacitors 51/resistors 52 are connected in parallel.

The damping unit 50 may be provided with or without fuse-protection. However, the main risk associated with RC-dampers is a short-circuit failure mode as this would lead to short circuit between the switching cells, for example. For this reason, a high voltage fuse may be implemented as protection. Figures 5A to 5E show assembly variations of the damping unit 50 comprising an optional fuse element 53 that is connected in series to the at least one capacitor 51 and the at least one resistor 52 by conductive connection 54. The fuse element 53 may be configured as a high voltage fuse element. The converter arrangement may comprise means to allow for fuse and RC-damper replacement.

Referring to Figure 6, according to a possible embodiment of the high-voltage converter arrangement, a monitoring system 56 may be provided to indicate a state of the fuse element 53. The monitoring system for the fuse element 53 may be realized as a striker pin 57 with an optical indicator. The striker pin 57 pops out of the fuse end when the fuse element is blown. The pin movement can trigger an auxiliary contact for remote indication. Another possible realization of a monitoring system 56 for monitoring the state of the fuse element 53 is a near field communication (NFC) readout system.

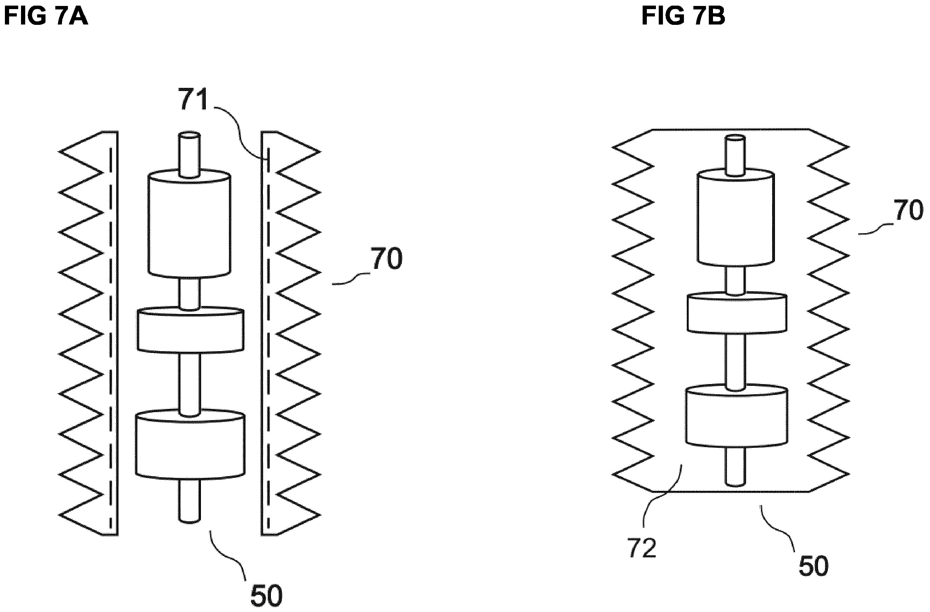

The at least one damping unit 50 may be enclosed by a suitable housing, for example an insulating housing. Figures 7A to 7C show potential embodiments of housings 70 for encasing a damping unit 50 configured as an RC-damper. Referring to Figure 7A, the insulating housing 70 is configured as a hollow-core insulator. The insulating housing can contain a material of porcelain or a composite material. In order to reduce local electric field enhancements, field grading elements 71 may be integrated in the insulating housing or, a field grading material may be used for the insulating housing.

According to a possible embodiment, the at least one damping unit may be embedded in a filling material. To reduce the risk of creepage and arcing, for example due to moisture accumulation, the insulating housing may be filled with a suitable media. Figure 7B shows an insulating housing 70 that is filled with an insulating media 72. The insulating media 72 may be a gel, oil, gas, or a solid material, for example epoxy. To further reduce the risk for moisture accumulation, moisture traps such as desiccants can be added to the inside of the insulating housing especially then filled with a fluid. The desiccant can be from the group of molecular sieve, zeolites, alumina, silica gel or other suitable material.

For outdoor use, the damping unit 50 can be installed into suitable outdoor-compatible insulating housings to protect them from weather conditions. Failure of this protection, for example, increase of moisture into the housing, poses risks to the integrity of the insulation system. In order to provide the housing 70 with a suitable outdoor-compatible quality, the material of the insulating housing 70 may contain an outdoor grade epoxy, or an indoor grade epoxy covered by outdoor grade silicone rubber coating, or only an outdoor grade silicone rubber, or a porcelain with or without additional outdoor grade silicone rubber coating. According to another possible embodiment, the housing material can have hydrophobicity transfer property.

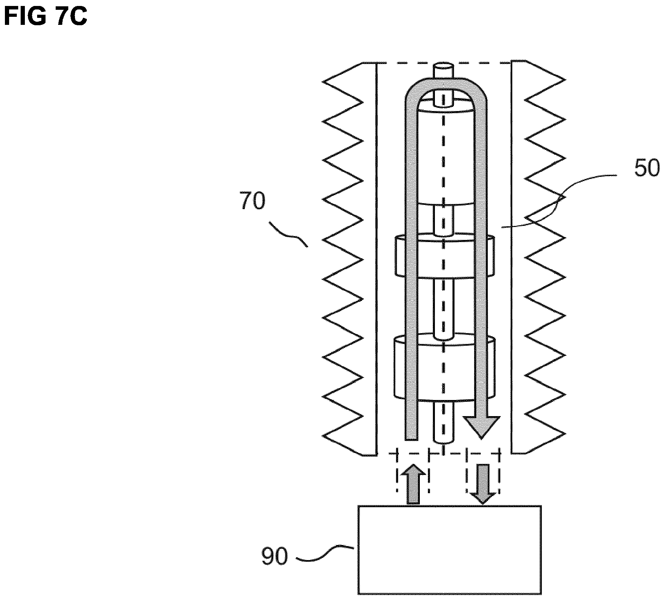

To avoid issues resulting from condensation, too low or too high temperatures, the at least damping unit 50 enclosed by the insulating housing 70 may be coupled to a ventilation system or climate control system 90, as illustrated in Figure 7C.

Figure 7C shows an embodiment, where a ventilation system 90 is coupled to the hollow core of housing 70 so that an air circulation can be created within the housing 70 by an airflow generated by the climate control/ventilation system 90. The airflow enters the interior of the insulating enclosure 70 at an inlet port of the enclosure and exits the interior of the insulating enclosure at an outlet port.

The key benefits of the proposed arrangement and design of the at least one damping unit 50 in a valve structure of a high voltage converter arrangement can be summarized as follows:
The high frequency noise of converter substations can significantly be reduced by the proposed damping unit design and arrangement.

The at least one damping unit is a key enabler for outdoor converter stations as they compensate for the shielding valve hall.

The concept of the at least one damping unit provides a certain redundancy. If a single damping unit would fail, the electromagnetic noise does not increase significantly.

The proposed solution can potentially prevent costly electromagnetic interference design adaptions.

The electromagnetic noise is cancelled very close to the noise source as the at least one damping unit is integrated in the valve structures.

The proposed damping units are not installed in series with the converter's main current path. Its components, i.e. the at least one resistor, the at least one capacitor and the optional fuse, can therefore be selected for lower current ratings, what makes the smaller and lower cost.

The at least one damping unit does not require additional space for installing, compared to other solutions such as high frequency reactors installed on the AC-yard or DC-yard. Savings can be expected because the at least one damping unit might be cheaper than other solutions such as high frequency reactors.

The proposed damping unit 50 provides an additional technique to control the electromagnetic noise of converter substations and thus expands the portfolio of EMC countermeasures.

The proposed approach is a differentiator for EMC performance.

The use of the at least one damping unit for a high voltage converter arrangement might facilitate the operation of high voltage DC converter stations within very EM-sensitive environments. Hence, it might expand the market for high voltage DC stations.

The proposed design and arrangement of the at least one damping unit 50 can be an enabler for new semiconductor technologies, such as silicon carbide (SiC), which produce significantly more noise at high frequencies.

The embodiments shown in the Figures 1 to 7C as stated represent exemplary embodiments of the high-voltage converter arrangement; therefore, they do not constitute a complete list of all embodiments according to the high-voltage converter arrangement. Actual converter arrangements may vary from the embodiments shown in the figures.

### Reference Signs

- 1: high voltage converter arrangement
- 10a, ..., 10x: switching cells
- 20: galvanic connection
- 30: parasitic inductance
- 40: parasitic capacitance
- 100,200: layer
- 110,210: first portion of switching cells
- 120,220: second portion of switching cells
- 50: damping unit
- 51: capacitor
- 52: resistor
- 53: fuse element
- 54: conductive connection
- 55: field shaping elements
- 56: monitoring system for a fuse element
- 57: striker pin
- 60: equipotential frame
- 70: insulating housing
- 71: field grading element
- 72: insulating media
- 80: insulating spacer
- 90: climate control/ventilation system

## Claims

1. A high-voltage converter arrangement, comprising:
- a plurality of switching cells (10a, ..., 10x),
- at least one damping unit (50) being configured to dampen electromagnetic noise caused by a switching operation within the switching cells (10a, ..., 10x),
- wherein the switching cells (10a, ..., 10x) are interconnected in series by a galvanic connection (20),
- wherein the at least one damping unit (50) is arranged between a cell potential of a first of the switching cells (10a, 10j) and a cell potential of a second of the switching cells (101, 10v), and
- wherein at least another one of the switching cells (10a, ..., 10x) is arranged between the first switching cell (10a, 10j) and second switching cell (101, 10v).

2. The high-voltage converter arrangement of claim 1,
- wherein the switching cells (10a, ..., 10x) are arranged in a first and second layer (100, 200),
- wherein the first and second layer (100, 200) of the switching cells (10a, ..., 10x) are spatially separated from each other within the valve structure,
- wherein the first switching cell (10a) and the second switching cell (101) are arranged in one of the first and second layer (100, 200).

3. The high-voltage converter arrangement of claim 1,
- wherein the switching cells (10a, ..., 10x) are arranged in a first and second layer (100, 200),
- wherein the first and second layer (100, 200) of the switching cells (10a, ..., 10x) are spatially separated from each other within the valve structure,
- wherein the first switching cell (10j) and the second switching cell (10v) are arranged in different ones of the first and second layer (100, 200).

4. The high-voltage converter arrangement of any of the claims 1 to 3,
wherein the at least one damping unit (50) comprises at least one capacitor (51) and at least one resistor (52).

5. The high-voltage converter arrangement of claim 4,
- wherein the at least one capacitor (51) is configured as a single layer, ceramic high-voltage capacitor,
- wherein the at least one resistor (52) is configured as a high-energy disc resistor.

6. The high-voltage converter arrangement of claim 4 or 5,
- wherein the at least one damping unit (50) comprises a plurality of the at least one capacitor (51) and a plurality of the at least one resistor (52),
- wherein the plurality of the at least one capacitor (51) and the plurality of the at least one resistor (52) are arranged in alternated fashion.

7. The high-voltage converter arrangement of any of the claims 1 to 6,
wherein the at least one damping unit (50) comprises at least one field shaping element (55) to reduce local electric field enhancement at the at least one capacitor (51) or resistor (52) of the damping unit (50).

8. The high-voltage converter arrangement of any of the claims 1 to 7,
wherein the at least one damping unit (50) comprises a high-voltage fuse element (53).

9. The high-voltage converter arrangement of any of the claims 1 to 8,
wherein the at least one damping unit (50) is enclosed in an insulating housing (70).

10. The high-voltage converter arrangement of any of the claims 1 to 9,
wherein the at least one damping unit is embedded in a filling material.

11. The high-voltage converter arrangement of any of the claims 1 to 10,
- wherein the first and second layer (100, 200) of the switching cells (10a, ..., 10x) are stacked on top of each other in a z-direction of the valve structure and spaced apart from each other in the z-direction,
- wherein the respective switching cells (10a, ..., 10x) of the first and second layer (100, 200) are spaced apart from each other within the first and second layer (100, 200) in a x- and y-direction, wherein the x-, y- and z-direction are orthogonal to each other.

12. The high-voltage converter arrangement of claim 11,
- wherein the first and second layer (100, 200) comprise a respective first portion (110, 210) of the switching cells (10a, ..., 10x) and a respective second portion (120, 220) of the switching cells (10a, ..., 10x),
- wherein the switching cells (10a, ..., 10x) of the respective first portion (110, 210) of the first and second layer (100, 200) are spaced apart from each other in the x-direction along the galvanic connection (20), and the switching cells (10a, ..., 10x) of the respective second portion (120, 220) of the first and second layer (100, 200) are spaced apart from each other in the x-direction along the galvanic connection (20),
- wherein the first and second portion (110, 120) of the switching cells (10a, ..., 10x) of the first layer (100) are spaced apart from each other in the y-direction, and the first and second portion (210, 220) of the switching cells (10a, ..., 10x) of the second layer (200) are spaced apart from each other in the y-direction,
- wherein the first switching cell (10a) is arranged in the respective first portion (110, 210) of the first and second layer (100, 200) and the second switching cell (101) is arranged in the respective second portion (120, 220) of the first and second layer (100, 200).

13. The high-voltage converter arrangement of any of the claims 1 to 12, comprising:
- an equipotential frame (60) being arranged in an equipotential plane between the first and second layer (100, 200) of the switching cells (10a, ..., 10x),
- wherein the at least one damping unit (50) is arranged between the equipotential frame (60) and a cell potential of a respective switching cell (10a, ..., 10x) of one of the first and second layer (100, 200).

14. The high-voltage converter arrangement of any of the claims 1 to 13, comprising:
- an insulating spacer (80) being arranged between the first and second layer (100, 200) of the switching cells (10a, ..., 10x),
- wherein the at least one damping unit (50) is arranged in the insulating spacer (80).

15. The high-voltage converter arrangement of any of the claims 1 to 14,
wherein the at least one damping unit (50) is coupled to a climate control system or a ventilation system (90).
